# EUROPEAN PATENT APPLICATION

(11) **EP 3 399 621 A1**
(43) Date of publication of application: **07.11.2018**
(21) Application number: 16881582.7
(22) Date of filing: 30.11.2016
(51) Int. Cl.: H02J 7/00, H01M 2/10, H01M 10/48, H02H 3/087, H02J 1/00

(54) **BATTERY-TYPE POWER SUPPLY DEVICE PROVIDED WITH WIRELESS COMMUNICATION FUNCTION**

(30) Priority: 29.12.2015 JP 2015257636
(71) Applicant: Novars Inc., Tokyo 1020082 (JP)
(72) Inventor: KOYAMA Kazuhiro, Chiba-shi Chiba 267-0067 (JP); OKABE Akihiro, Tokyo 1020082 (JP); NOBE Tetsuya, Tokyo 133-0057 (JP)
(74) Representative: Herrero & Asociados, S.L.
(86) International application number: PCT/JP2016/085592
(87) International publication number: WO 2017/115602

(57) **Abstract**

An objective of the present invention is to realize a current detection function in a cell type power supply device having a wireless communication function. The cell type power supply device includes a housing 18 having a shape and dimensions based on a cell standard such as to be attachable with a cell box of an external load device. A cell holder 2 that holds an external cell in the housing includes an inner positive terminal 5 and an inner negative terminal 6 that are brought into contact with front and rear terminals of the held external cell. An outer positive terminal 3 connected to the inner positive terminal is provided on a front end surface of the housing, and an outer negative terminal 4 connected to the inner negative terminal is provided on a rear end surface of the housing. An output transistor 32 is interposed between the inner negative terminal and the outer negative terminal. An RFIC 35 generates a control signal of the output transistor in accordance with a signal received via an antenna. A detection resistance 31 provided in series to the output transistor converts current flowing through the output transistor into voltage. The voltage is detected by a current detection unit 33.

## Description

### FIELD

Embodiments described herein relate generally to a cell type power supply device having a wireless communication function.

### BACKGROUND

Patent Literature 1 discloses a wireless receiver drive that is attachable in a cell box of an external load of an electric toy etc. This wireless receiver drive is configured as a so-called switching power supply and changes, with a wireless module, a duty cycle of a drive signal of a transistor interposed between a held cell and an external terminal in accordance with a user instruction received via a wireless receiving unit, thereby changing a driving voltage to an external load device, whereby operation of the external load device such as an electric toy can be controlled. The wireless receiver drive further has a function of controlling power supply of the wireless receiving unit in accordance with an external switch of the external load device, thereby realizing an effect of preventing the cell from exhausting.

If overcurrent flows in this wireless receiver drive, there is the risk that the wireless receiver drive may suffer a breakdown. In particular, the risk is remarkable when the wireless receiver drive is connected in series with another plurality of cells. However, due to a problem regarding mounting space, it is impossible for the wireless receiver drive not only to detect overcurrent but also to have a function of detecting current flowing through a transistor.

### CITATION LIST

### PATENT LITERATURE

Patent Literature 1: Japanese Patent Laid-Open No. 2015-177939

### SUMMARY OF INVENTION

### TECHNICAL PROBLEM

An objective of the present invention is to implement a current detection function in a cell type power supply device having a wireless communication function.

### SOLUTION TO PROBLEM

A cell type power supply device having a wireless communication function according to the present embodiment includes, for example, a housing having a shape and dimensions based on a cell standard such as to be attachable with a cell box of an external load device. A cell holder that holds an external cell in the housing includes an inner positive terminal and an inner negative terminal that are brought into contact with front and rear terminals of the held external cell. An outer positive terminal connected to the inner positive terminal is provided on a front end surface of the housing, and an outer negative terminal connected to the inner negative terminal is provided on a rear end surface of the housing. An output transistor is interposed at least one of between the inner negative terminal and the outer negative terminal, and between the inner positive terminal and the outer positive terminal. A control circuit generates a control signal of the output transistor in accordance with a signal received via an antenna for communicating with an external information device. A detection resistance provided in series with the output transistor converts current flowing through the output transistor into voltage. The voltage is detected by a current detection unit.

### BRIEF DESCRIPTION OF THE VIEWS OF THE DRAWING

Fig. 1 is a perspective view showing an exterior of a cell type power supply device having a wireless communication function according to a first embodiment of the present invention.
Fig. 2 is a diagram showing an internal configuration of the cell type power supply device of Fig. 1.
Fig. 3 is a diagram showing a mode of use of the cell type power supply device of Fig. 1.
Fig. 4 is an equivalent circuit diagram of the cell type power supply device of Fig. 1.
Fig. 5 is a timing chart showing changes of the gate signal of an output transistor with respect to output of a comparator of Fig. 4.
Fig. 6 is an equivalent circuit diagram of a modification of the cell type power supply device of Fig. 4.
Fig. 7 is an equivalent circuit diagram of a cell type power supply device including a wireless communication function according to a second embodiment of the present invention.
Fig. 8 is a timing chart showing changes of a gate signal of an output transistor with respect to output of an operational amplifier of Fig. 7.
Fig. 9 is an equivalent circuit diagram of a cell type power supply device including a wireless communication function according to a third embodiment of the present invention.
Fig. 10 is a timing chart showing changes of an output voltage with respect to an input voltage of a comparator of Fig. 9.
Figs. 11A to 11C are timing charts each showing times for transmitting operation information on a target device from a communication unit of RFIC of Fig. 9.
Fig. 12 is an equivalent circuit diagram of a cell type power supply device including a wireless communication function according to a fourth embodiment of the present invention.

### DETAILED DESCRIPTION

Hereafter, a cell type power supply device having a wireless function according to the present embodiment will be described with reference to the drawings. In the following description, the same reference numerals denote components having substantially identical functions and structures, and the repeated description thereof is made only when necessary.

### (First Embodiment)

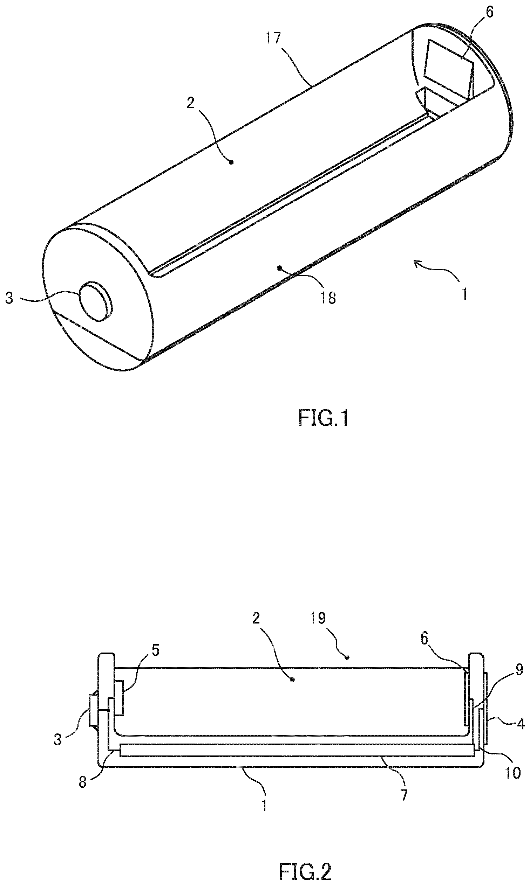

Fig. 1 is a perspective view showing an exterior of a cell type power supply device 1 having a wireless function according to a first embodiment of the present invention. Fig. 2 is a plan view showing a mode of use of the cell type power supply device 1 of Fig. 1. The cell type power supply device 1 having a wireless function according to the present embodiment (hereinafter, simply referred to as a cell type power supply device) 1 has a shape and external dimensions based on a cell standard. Typically, the cell type power supply device 1 according to the present embodiment has a cylinder having a height and diameter based on the AA size cell standard. However, the cell type power supply device 1 may have a shape and dimensions based on another cell standard. Here, descriptions are provided on the assumption that the cell type power supply device 1 according to the present embodiment is based on the AA standard.

A main body 17 of the cell type power supply device 1 is wrapped by a columnar housing 18 having the same shape and dimensions as those of the AA size cell standard. A circle conductive plate is attached as an outer positive terminal 3 at the center of a top surface (also referred to as a front end surface) of the main body 17. A circle conductive plate is attached as an outer negative terminal 4 at the center of a bottom surface (also referred to as a rear end surface) of the main body. A portion of the peripheral surface of the housing 18 is cut in an oval shape. The length of a cut portion 19 is equal to that of AAA cells, and the width is a little larger than that of AAA cells. A user can insert an AAA cell into or remove it from a cell holder 2 through the cut portion 19. The shape of the cell holder 2 is a columnar space having a length and diameter based on the AAA standard. The central axis of the cell holder 2 is offset in a radial direction with respect to the columnar central axis of the cell type power supply device 1. This offset provides a small space between the housing 18 and the cell holder 2. In this small space, a substrate 7 that realizes various functions of the cell type power supply device 1 is mounted.

A conductive plate is attached as an inner positive terminal 5 at the center of the front end of the cell holder 2, i.e., on the same side as the outer positive terminal 3. A conductive plate having spring property is attached as an inner negative terminal 6 at the center of the rear end of the cell holder 2, i.e., on the same side as the outer negative terminal 4. The positive terminal of the AAA cell held in the cell holder 2 is brought into contact with the inner positive terminal 5, and the negative terminal of the AAA cell is brought into contact with the inner negative terminal 6. The inner positive terminal 5 is connected to the outer positive terminal 3 and the substrate 7 via a distribution cable 8. The inner positive terminal 5 and the outer positive terminal 3 may be a common conductive plate. The inner negative terminal 6 is connected to the substrate 7 via a distribution cable 9. The outer negative terminal 4 is connected to the substrate 7 via a distribution cable 10.

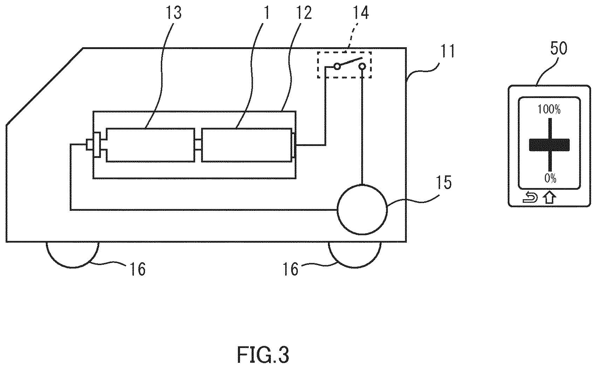

Fig. 3 is a diagram showing a mode of use of the cell type power supply device 1 of Fig. 1. As shown in Fig. 3, the cell type power supply device 1 is attached alone, or in series or in parallel with another cell 13 to a cell box 12 of an external load device 11 driven by an AA cell. The external load device 11 is such as an electric toy, an electric tools toy, a disaster prevention sensor, a security sensor, a flashlight, a bicycle light, a cell-powered cooker, an electrical float, an electric pet feeding device, a cell-powered fan, or a cell-powered hand soap dispenser. Here, the external load device 11 is described as an electric toy driven by a motor 15. The electric toy 11 includes the cell box 12. The cell type power supply device 1 and another one AA cell 13 are attached in series with the cell box 12. The cell box 12 is electrically connected to a motor 15 via an external switch 14. A wheel 16 is connected to the motor 15 via a transmission mechanism. When the external switch 14 is turned on, an electrical connection between the motor 15 and the cell box 12 is secured. When the external switch 14 is turned off, the motor 15 is electrically cut from the cell box 12.

An external information device 50 is typically mobile digital electronic equipment, such as a smartphone, a portable telephone, a tablet terminal, or a radio control communication device, which has a communication function and an operation panel function, etc. The cell type power supply device 1 according to the present embodiment has a wireless communication function and is wirelessly connected to the external information device 50. An instruction to set a power output to any value within a range of 0% to 100% (output instruction) is wirelessly transmitted from the external information device 50 to the cell type power supply device 1. As will be described later, an output transistor is interposed in the distribution wire 9 between the inner negative terminal 6 and the outer negative terminal 4 of the cell holder 2 of the cell type power supply device 1. By the PWM (pulse width signal modulation) system, the cell type power supply device 1 adjusts a power output by changing a duty cycle of a gate control signal (output control signal) of the output transistor in accordance with the output instruction from the external information device 50.

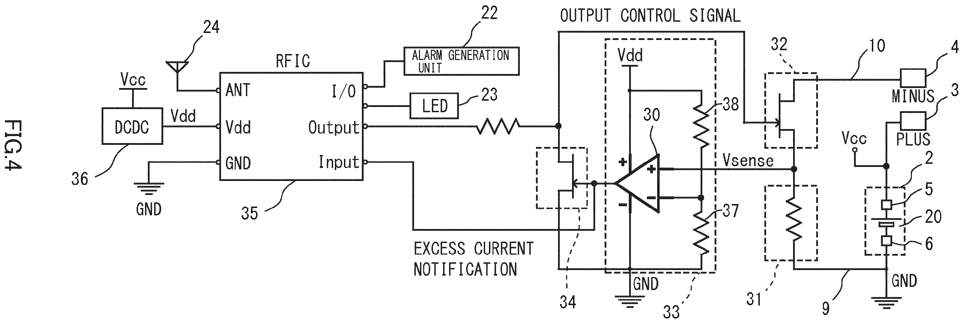

Fig. 4 is an equivalent circuit diagram of the cell type power supply device of Fig. 1. The circuit of the cell type power supply device according to the present embodiment includes a comparator 30, a detection resistance 31, an output transistor 32, a transistor 34 for output cutoff, an RFIC 35, and a DC-DC converter 36. Those electronic components are mounted on the substrate 7. The output transistor 32 is typically an N-channel MOSFET, and is interposed between the inner negative terminal 6 and outer negative terminal 4 in the circuit. The output transistor 32 may be a P-channel MOSFET. In that case, the output transistor 32 is interposed between the inner positive terminal 5 and the outer positive terminal 3 in the circuit. When the output transistor 32 is the P-channel MOSFET, high-level/low-level is substituted for low-level/high-level, respectively in the following description. In addition, the output transistor 32 may be a bipolar transistor. In that case, a gate control signal described below is substituted for a base control signal. Here, the output transistor 32 is described as an N-channel MOSFET.

The detection resistance 31 is disposed in series with the output transistor 32. That is, the inner negative terminal 6 is connected to one end of the detection resistance 31 via the distribution cable 9. The other end of the detection resistance 31 is connected to the source terminal of the output transistor 32. The drain terminal of the output transistor 32 is connected to the outer negative terminal 4 via the distribution cable 10. The inner positive terminal 5 is directly connected to the outer positive terminal 3 via a distribution cable 8. In addition, the inner positive terminal 5 is connected to the input terminal of the DC-DC converter 36 via the distribution cable 8. The DC-DC converter 36 raises the voltage Vcc of the AAA cell attached in the cell holder 2 to the power supply voltage Vdd of, for example, 3.0 V for internal circuit operation. The RFIC 35 described later and the comparator 30 are driven by the power supply voltage Vdd. However, if the RFIC 35 and the comparator 30 operate at 1.5 V or lower, the DC-DC converter 36 is not necessary. The RFIC 35 is driven by the power supply voltage Vdd generated by the DC-DC converter 36. The ANT terminal of the RFIC 35 is connected to an antenna 24 for wireless communication, and the I/O terminal is connected to an alarm generation unit (speaker) 22 and a light emitting diode (LED) 23. The Output terminal of the RFIC 35 is connected to the gate terminal of the output transistor 32, and the Input terminal is connected to the output terminal of the comparator 30.

The RFIC 35 functionally includes a communication unit, a drive signal generation unit, and a control unit, etc. The communication unit wirelessly communicates with the external information device 50 via the antenna 24 for wireless communication in accordance with control of the control unit. The wireless communication system may be any wireless system such as an infrared rays system or Bluetooth (registered trademark). Specifically, the communication unit receives a code wireless signal indicating a motor output instruction value from the external information device 50 via the antenna 24 for wireless communication. The motor output instruction value is, for example, a value of a proportion within 0% to 100% selected by a user operating the external information device 50.

The drive signal generation unit generates a motor drive signal corresponding to the received motor output instruction value in accordance with control of the control unit. Here, the motor drive signal is provided as a PWM (Pulse Width Signal Modulation) signal. When the motor output instruction value is 0%, the drive signal generation unit generates a 0% duty cycle (only low level) PWM signal. When the motor output instruction value is 100%, the drive signal generation unit generates a 100% duty cycle (only high level) PWM signal. When the motor output instruction value is 50%, the drive signal generation unit generates a 50% duty cycle (1-to-1 low level-to-high level ratio) signal. The PWM signal generated by the drive signal generation unit is input to the output transistor 32 as a gate signal. The high-level of the PWM signal generated by the drive signal generation unit refers to a voltage value sufficiently higher than the threshold voltage Vth of the output transistor 32, and the output transistor 32 is ON. The low-level refers to a voltage value sufficiently lower than the threshold voltage Vth of the output transistor 32, and the output transistor 32 is OFF.

The control unit turns on or blinks the LED 23 and causes the alarm generation unit 22 to generate an alarm in response to a change in the output voltage of the comparator 30 described later from the low-level to the high-level, i.e., in response to detection of overcurrent. By the LED 23 of the cell type power supply device being turned on and the generation of the alarm, a user present near the cell type power supply device 1 can recognize that the overcurrent has flowed through the output transistor 32 of the cell type power supply device 1. In addition, the communication unit transmits a notification signal for notification of the overcurrent to the external information device 50 in accordance with control of the control unit. The external information device 50 receives the notification signal and displays text information etc. for notification of the occurrence of the overcurrent, on a built-in display unit. Therefore, even when the cell type power supply device 1 is positioned at a position that cannot be seen directly, a user can recognize the occurrence of the overcurrent in a circuit of the cell type power supply device 1 by checking text information displayed on the external information device 50.

The output transistor 32 functions as a switching element between the inner negative terminal 6 and the outer negative terminal 4 of the cell type power supply device. The source terminal of the output transistor 32 is connected to the other end of the detection resistance 31, the drain terminal is connected to the outer negative terminal 4, and the gate terminal is connected to the Output terminal of the RFIC 35. The ON/OFF of the output transistor 32 is controlled by the voltage (gate voltage) applied by the gate control signal input to the gate.

When the gate voltage is in a saturation region sufficiently higher than the threshold voltage Vth, a channel is formed between the source and drain, and the maximum drain current flows. In this state, the output transistor 32 is ON. When the output transistor 32 is turned on, the outer positive terminal 3 and the outer negative terminal 4 of the cell type power supply device 1 are brought into conduction with each other. When the external switch 14 of the electric toy 11 is ON, the outer positive terminal 3 and the outer negative terminal 4 of the cell type power supply device are brought into conduction with each other, the circuit of the electric toy 11 is brought into conduction, and the motor 15 is driven. In contrast, when the gate voltage is sufficiently lower than the threshold voltage Vth, a drain current does not flow between the source and drain. In this state, the output transistor 32 is OFF. When the output transistor 32 is turned off, the outer positive terminal 3 and the outer negative terminal 4 of the cell type power supply device are cut from each other. Accordingly, even when the external switch 14 of the electric toy 11 is ON, the circuit of the electric toy 11 is cut off, and the motor 15 is not driven.

When the PWM signal (gate control signal) output from the RFIC 35 is at the low-level, the output transistor 32 becomes OFF, the circuit of the electric toy 11 becomes cut off, and the motor 15 is not driven. When the PWM signal output from the RFIC 35 is at the high-level, the output transistor 32 becomes ON, the circuit of the electric toy 11 is brought into conduction, and the motor 15 is continuously driven. The duty cycle of the PWM signal is changed within a range of 0% to 100%. When the PWM signal is at the high-level, the transistor 32 becomes ON, current flows to the motor 15, and the motor 15 starts rotation. When the PWM signal is switched from the high-level to the low-level, the motor 15 gradually slows down its rotation because of its coil characteristics. In contrast, when the PWM signal is switched to the high-level, the rotation speeds up again. By using those characteristics, the motor 15 can be rotated at given revs by PWM control. Note that a capacitor may be used to make a short circuit between the outer positive terminal 3 and the outer negative terminal 4, and a square wave may be smoothed.

The comparator 30 and the detection resistance 31 are included in an overcurrent determination unit (current detection unit) 33. The detection resistance 31 is interposed between the source terminal of the output transistor 32 and the inner negative terminal 6 and converts current flowing between the terminals 3 and 4 into a voltage (detected voltage) Vsense. The comparator 30 is driven by the power supply voltage Vdd supplied from the DC-DC converter 36. The non-inverting terminal of the comparator 30 is connected to the detected voltage Vsense detected by the detection resistance 31. The inverting terminal of the comparator 30 is connected to a reference voltage Vref. The reference voltage Vref. is a fixed value obtained by dividing the power supply voltage Vdd between a resistance 37 and a resistance 38. Typically, a combination of the resistance values of the resistances 37 and 38, as well as the detection resistance 31 is adjusted in advance so that the reference voltage Vref. is equivalent to a detected voltage value at the time of steady-state current. The comparator 30 compares the detected voltage Vsense with the reference voltage Vref. When a comparison result is positive, overcurrent occurring is detected. When the comparison result is zero or lower, overcurrent not occurring is detected. When the overcurrent occurring is detected, the output voltage of the comparator 30 is at the high-level. Of course, if the transistor 34 for output cutoff is of P-channel, the output voltage is at the low-level. When the overcurrent not occurring is detected, the output voltage of the comparator 30 is at the low-level. Of course, if the transistor 34 for output cutoff is of P-channel, the output voltage is at the high-level.

The high-level of the output voltage of the comparator 30 at the time of detection of the overcurrent occurring refers to a voltage within a saturation region sufficiently higher than the threshold voltage Vth' of the transistor 34 for output cutoff. The low-level refers to a voltage lower than the threshold voltage Vth' of the transistor 34 for output cutoff. The output terminal of the comparator 30 is connected to the gate of the transistor 34 for output cutoff. When the output voltage of the comparator 30 is at the high-level, the transistor 34 for output cutoff is turned on. When the output voltage of the comparator 30 is at the low-level, the transistor 34 for the output cutoff is turned off. The output voltage of the comparator 30 is applied to the Input terminal of the RFIC 35. The output signal from the comparator 30 is input to the RFIC 35 as an overcurrent notification signal.

The transistor 34 for output cutoff forms an output cutoff unit and is typically an N-channel MOSFET having the same specification as that of the output transistor 32 but may be a P-channel MOSFET. In addition, the transistor 34 for output cutoff may be a bipolar transistor. In that case, the gate is substituted for the base in the following.

The output cutoff unit cuts off an output unit in response to the overcurrent determination unit 33 detecting the occurrence of overcurrent. The source terminal of the transistor 34 for output cutoff is connected to the ground (GND), the drain terminal is connected to the gate terminal of the output transistor 32, and the gate terminal is connected to the output terminal of the comparator 30. The transistor 34 for output cutoff is turned on/off in accordance with the output voltage of the comparator 30.

When the gate voltage of the transistor 34 for output cutoff is sufficiently higher than a threshold voltage Vth', a channel is formed between the source and drain, and the drain current flows. Therefore, the transistor 34 for output cutoff is turned on, and the gate of the output transistor 32 is brought into conduction with GND. When the gate of the output transistor 32 is grounded, the gate voltage of the output transistor 32 is decreased to the ground voltage (0 V) even when the gate control signal (PWM signal) of the RFIC 35 is at the high-level, whereby the output transistor 32 is OFF. As the output transistor 32 is OFF, the outer positive terminal 3 and the outer negative terminal 4 of the cell type power supply device are cut from each other, and the operation of the electric toy 11 is stopped.

When the gate voltage of the transistor 34 for output cutoff is sufficiently lower than the threshold voltage Vth', a drain current does not flow between the source and drain. Accordingly, the transistor 34 for output cutoff is turned off. When the transistor 34 for output cutoff is OFF, the gate of the output transistor 32 is separated from the ground. Accordingly, the output transistor 32 performs a normal operation, and the ON/OFF of the output transistor 32 is controlled by the gate control signal from the RFIC 35.

When the transistor 34 for output cutoff is a P-channel MOSFET, the source terminal thereof is connected to the output terminal of the DC-DC converter 36. When the gate voltage of the transistor 34 for output cutoff is sufficiently higher than the threshold voltage Vth', the transistor 34 for output cutoff is turned on, and the power supply voltage Vdd (high-level) is applied to the gate of the output transistor 32. When the gate voltage of the transistor 34 for output cutoff is sufficiently lower than the threshold voltage Vth', the transistor 34 for output cutoff is turned off, and the output transistor 32 performs the normal operation, that is, the ON/OFF of the output transistor 32 is controlled by the gate control signal from the RFIC 35.

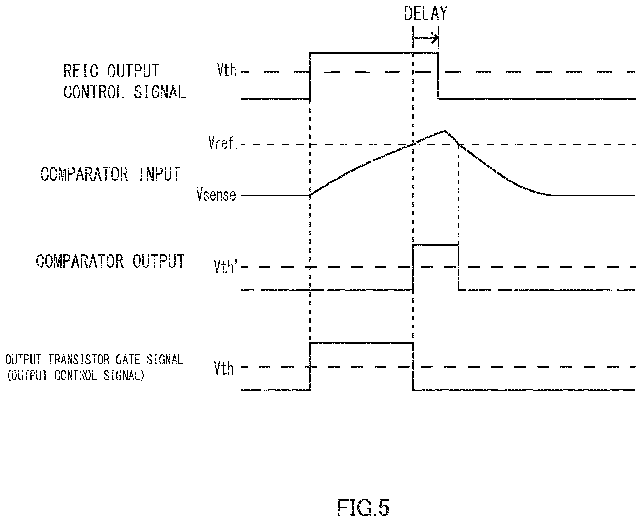

Fig. 5 is a timing chart showing changes of the gate signal of the output transistor 32 with respect to output of the comparator 30 of Fig. 4. The cell type power supply device 1 according to the first embodiment realizes, in hardware, a function of turning off the output transistor 32 in response to overcurrent flowing through the output transistor 32, whereby the cell type power supply device 1 is cut off. As shown in Fig. 5, the comparator 30 outputs a voltage signal at the high-level when the detected voltage Vsense is higher than the reference voltage Vref., i.e., in response to the occurrence of overcurrent. The voltage signal at the high-level output by the comparator 30 is input to the gate of the transistor 34 for output cutoff, the transistor 34 for output cutoff is turned on, and the gate of the output transistor 32 and the GND are brought into conduction with each other. Accordingly, even when the voltage signal at the high-level from the RFIC 35 is input, the output transistor 32 is forcibly turned off because the gate voltage of the output transistor 32 is decreased to the ground voltage. When the output transistor 32 is turned off, the power output is cut off. In this way, with the circuit configuration in which the gate voltage of the output transistor 32 is decreased to the ground voltage in response to overcurrent occurring, the circuit can be protected from the overcurrent.

The above protection function can be realized by decreasing the duty cycle of the gate control signal from the RFIC 35 to 0% when the overcurrent is detected. That is, the gate voltage of the output transistor 32 from the RFIC 35 may be changed to the low-level in response to the output voltage of the comparator 30 reaching the high-level, However, it is unavoidable for the RFIC 35 to take a software processing period from receiving the overcurrent notification signal from the comparator 30 to changing the duty cycle of the gate control signal to 0%. Therefore, as shown in Fig. 5, a delay time occurs from the occurrence of overcurrent to turning off the output transistor 32. Accordingly, realizing the function of turning off the output transistor 32 in response to the occurrence of overcurrent in hardware can make the time from detecting the overcurrent to turning off the output transistor 32 shorter than the case where the same function is realized in software, whereby the circuit can be protected from the overcurrent.

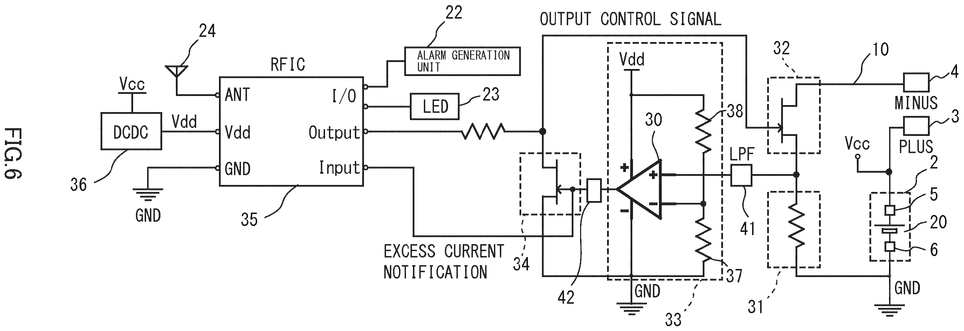

As shown in Fig. 6, an LPF (low-pass filter) 41 may be interposed in series between the comparator 30 and the detection resistance 31. For example, the LPF 41 includes an RC circuit. The LPF 41 allows only a low-frequency overcurrent component that continues for a certain period to pass, whereby a high-frequency overcurrent component that occurs instantaneously and continues shorter than the certain period is cut off. Accordingly, a vibration phenomenon of the ON/OFF of the output transistor 32 due to the overcurrent instantaneously occurring can be prevented.

As shown in Fig. 6, a monostable vibrator 42 may be interposed in series between the output terminal of the comparator 30 and the gate of the transistor 34 for output cutoff. The monostable vibrator 42 retains a high-level state for a certain period when the output voltage of the comparator 30 changes from the low-level to the high-level. By Inserting the monostable vibrator 42 in a previous stage of the gate of the transistor 34 for output cutoff, the output voltage of the monostable vibrator 42 is retained at the high-level for a certain period even when a high-level period of the output voltage of the comparator 30 due to overcurrent occurring in a very short time is very short, the ON of the transistor 34 for output cutoff can be continued for the certain period, whereby the OFF of the output transistor 32 can also be retained for the certain period, and the power output can be cut off for the certain period. Inserting the monostable vibrator 42 can increase a switching period of the ON/OFF of the transistor 34 for output cutoff to at least equal to or longer than a pulse width output from the monostable vibrator 42, and thus also serves as prevention of chattering.

### (Second Embodiment)

In the first embodiment, the output transistor 32 is turned off in response to the occurrence of overcurrent, thereby cutting off the power output; however, instead of turning off the output transistor 32, the drain current of the output transistor 32 generated with the occurrence of overcurrent may be adjusted by descent control of, for example, its gate voltage to suppress the peak value of the drain current.

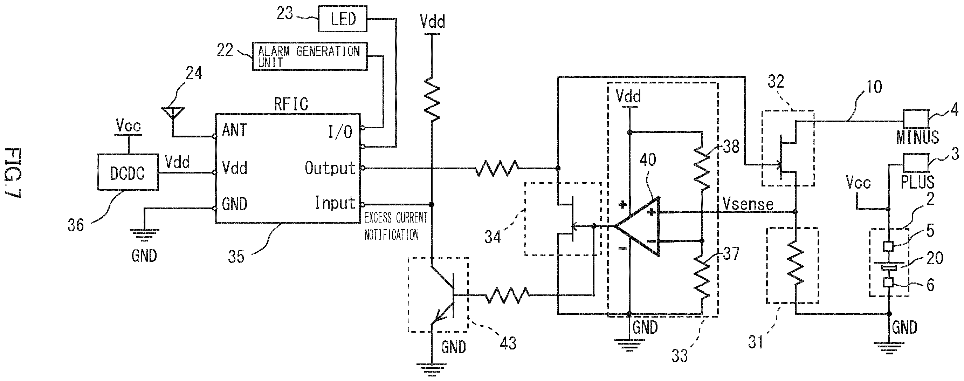

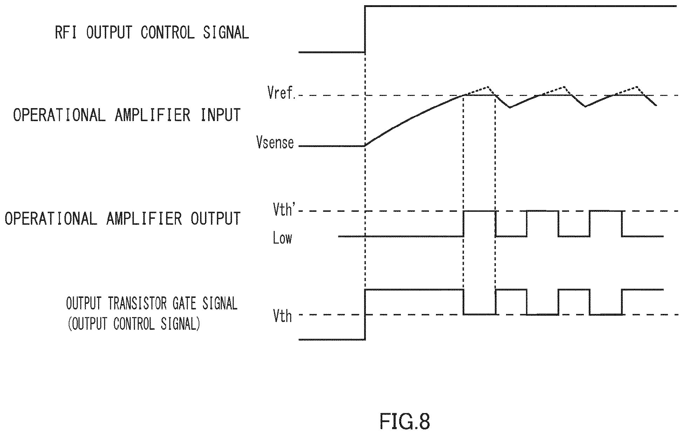

Fig. 7 is an equivalent circuit diagram of a cell type power supply device 1 including a wireless communication function according to a second embodiment of the present invention. Fig. 8 is a timing chart showing changes of a gate signal of the output transistor 32 with respect to an output voltage of an operational amplifier 40 of Fig. 7. The circuit configuration of the cell type power supply device 1 according to the second embodiment mainly differs from the circuit configuration of the cell type power supply device according to the first embodiment in that the comparator 30 is swapped for the operational amplifier 40.

The operational amplifier 40 and the detection resistance 31 are included in an overcurrent determination unit 33. The overcurrent determination unit 33 determines whether overcurrent flows through the output transistor 32 of the cell type power supply device 1 and outputs a voltage in accordance with a crest value of the overcurrent. The operational amplifier 40 is driven by the power supply voltage Vdd generated by the DC-DC converter 36. The non-inverting terminal of the operational amplifier 40 is connected to one end of the detection resistance 31, and a voltage Vsense reflecting current flowing through the output transistor 32 is applied to the non-inverting terminal. A reference voltage Vref. is applied to the inverting input terminal of the operational amplifier 40. The reference voltage Vref. is generated by the voltage division of the power supply voltage Vdd between the resistance 37 and the resistance 38. Typically, a combination of the resistance values of the resistances 37 and 38, as well as the detection resistance 31 is adjusted in advance so that the reference voltage Vref. is equivalent to the detected voltage Vsense corresponding to a maximum current. The maximum current is designed to be the maximum rating of the output transistor 32 or a value lower than the maximum rating by a provided margin. The operational amplifier 40 amplifies the difference between the detected voltage Vsense and the reference voltage Vref. When the detected voltage Vsense is lower than the reference voltage Vref., the output voltage of the operational amplifier 40 indicates a low-level. When the detected voltage Vsense is equal to the reference voltage Vref. or when the detected voltage Vsense is higher than the reference voltage Vref., the output voltage of the operational amplifier 40 indicates a value that falls within an unsaturation region of the transistor 34 for output cutoff and lies in proximity to the threshold voltage Vth', for example, about 1.5 V.

When the output voltage of the operational amplifier 40 is at the low-level (when overcurrent does not occur), the transistor 34 for output cutoff is turned off. As shown in Fig. 8, when the transistor 34 for output cutoff is OFF, the output transistor 32 is turned on/off in accordance with the gate control signal (PWM signal) from the RFIC 35.

Operation at a time when current of the output transistor 32 increases to reach an overcurrent zone will be described.

When the detected voltage Vsense is about to be higher than reference voltage Vref., the output of the operational amplifier 40 rises, and the gate voltage of the transistor 34 for output cutoff increases, whereby the transistor 34 for output cutoff operates. The gate voltage of the transistor 34 for output cutoff at that time is in proximity to the threshold voltage Vth'. At this time, the gate voltage of the output transistor 32 decreases, and the drain current decreases accordingly, whereby the gate voltage of the output transistor 32 becomes in proximity to the threshold voltage Vth. In this state, the voltage of the inverting input terminal of the operational amplifier 40 is equal to the voltage of the inverting input terminal, the reference voltage Vref., and an imaginary short circuit is established.

In an output stage of the operational amplifier 40, a transistor 43 for overcurrent notification is placed. The transistor 43 for overcurrent notification is typically an npn transistor. The base terminal of the transistor 43 for overcurrent notification is connected to the output of the operational amplifier 40, and the collector terminal thereof is connected to the power supply voltage Vdd via a resistance, and the emitter terminal thereof is connected to the ground GND. The ON/OFF of the transistor 43 for overcurrent notification is controlled by base voltage.

When the output voltage of the operational amplifier 40 applied to the base of the transistor 43 for overcurrent notification is at the low-level, the transistor 43 for overcurrent notification is OFF, and collector current does not flow. When the transistor 43 for overcurrent notification is OFF, i.e., when overcurrent does not flow, the input terminal of the RFIC 35 is at the high-level. In contrast, when the output voltage of the operational amplifier 40 applied to the transistor 43 for overcurrent notification is a value in proximity to the threshold voltage Vth' of the transistor 34 for output cutoff, for example, about 1.5 V, the transistor 43 for overcurrent notification is in a saturation state, and the collector current flows. It utilizes the fact that the threshold voltage Vth' of the transistor 34 for output cutoff is higher than the base voltage of the transistor 43 for overcurrent notification. Therefore, the transistor 43 for overcurrent notification is ON. When the transistor 43 for overcurrent notification is ON, the input terminal of the RFIC 35 is at a low-level (collector saturation voltage (for example, 0.1 V)).

That is, when overcurrent occurs in the output transistor 32, an input signal to the RFIC 35 is at the low-level, and when overcurrent does not occur, the input signal to the RFIC 35 is at a high-level. While the low level signal is input to the control unit of the RFIC 35, the control unit turns on the LED 23 and causes the alarm generation unit 22 to generate an alarm. In addition, the communication unit wirelessly transmits a notification signal for notifying a user of the occurrence of overcurrent to the external load device 11 in accordance with control of the control unit.

In the first embodiment, when overcurrent does not flow through the output transistor 32, the output transistor 32 is turned on, and when overcurrent flows through the output transistor 32, the output transistor 32 is turned off. In contrast, in the second embodiment, when overcurrent is detected, instead of turning off the output transistor 32, the voltage of the gate control signal is decreased to the value in proximity to the threshold value Vth of the output transistor 32, the drain current of the output transistor 32 is thereby reduced, whereby the peak current thereof is suppressed, thereby realizing the mitigation of pulsation.

### (Third Embodiment)

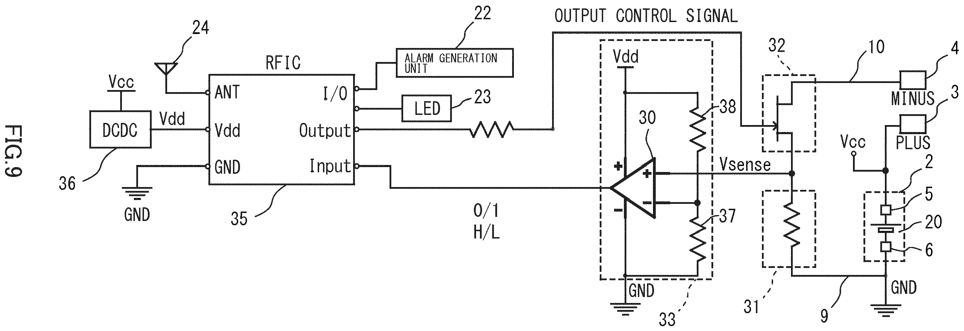

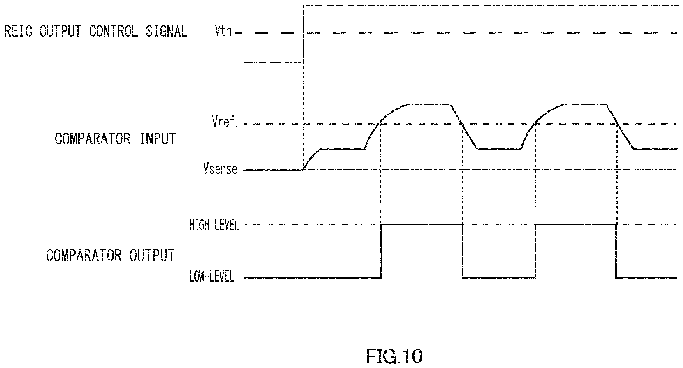

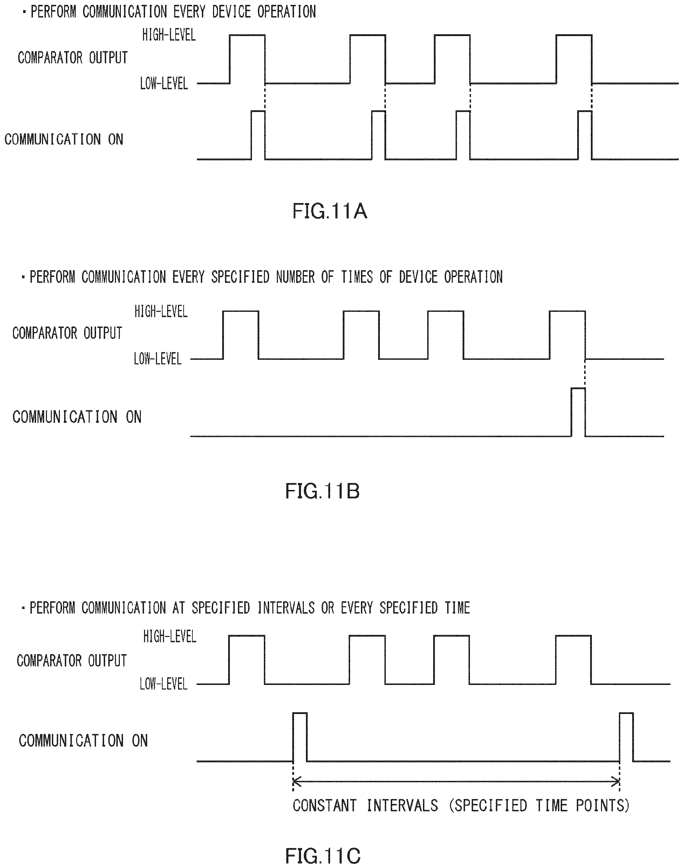

Fig. 9 is an equivalent circuit diagram of the cell type power supply device 1 including a wireless communication function according to a third embodiment of the present invention. Fig. 10 is a timing chart showing changes of an output voltage with respect to an input voltage of a comparator 30 of Fig. 9. Figs. 11A to 11C are timing charts each showing times for transmitting operation information on a target device from a communication unit of an RFIC 35 of Fig. 9. The detection of current flowing through the detection resistance 31 can be utilized for detection of an operation state such as ON/OFF of the external load device equipped with a battery case in which the cell type power supply device is mounted. For example, a conceivable external load device is a hand soap dispenser. In a particular kind of hand soap dispenser, an external switch is turned on in response to a change of a sensing state of a noncontact sensor by a user holding a hand out over a sensing area of the noncontact sensor, and a motor is driven, whereby hand soap is dispensed. In addition, a conceivable external load device is, for example, a sensor light device that is turned on when a heat detecting sensor detects a human etc.

The cell type power supply device 1 according to the third embodiment is made by omitting the transistor 34 for output cutoff from the circuit of the cell type power supply device according to the first embodiment. In the present embodiment, the comparator 30 and the detection resistance 31 are included in an operation detection unit. The operation detection unit detects operating current of the external load device via the detection resistance 31. The detection resistance 31 is interposed between the outer negative terminal 4 and the inner negative terminal 6. The comparator 30 is driven by the power supply voltage Vdd supplied from the DC-DC converter 36. The output terminal of the comparator 30 is connected to the Input terminal of the RFIC 35 via a distribution cable. A voltage corresponding to a value of current detected by the detection resistance 31 (hereafter, called a detected voltage Vsense) is input to the noninverting input terminal of the comparator 30. A reference voltage Vref. is applied to the inverting input terminal of the comparator 30. The reference voltage Vref. is a fixed value obtained by dividing the power supply voltage Vdd between a resistance 37 and a resistance 38. Typically, a combination of the resistance values of the resistances 37 and 38, as well as the detection resistance 31 is adjusted in advance so that the reference voltage Vref. is the detected voltage Vsense that is slightly lower than a voltage corresponding to the operating current flowing between the outer negative terminal 4 and inner negative terminal 6 when the external load device operates.

The comparator 30 compares the detected voltage Vsense with the reference voltage Vref. As shown in Fig. 10, when the detected voltage Vsense is lower than the reference voltage Vref., i.e., when the external load device does not operate, the output voltage of the comparator 30 is at the low-level. When the detected voltage Vsense is higher than the reference voltage Vref., i.e., when the external load device operates, the output voltage of the comparator 30 is at the high-level. The change of the output voltage of the comparator 30 represents the operation/non operation of the external load device and received by the RFIC 35 as an operation sense signal.

The RFIC 35 generates information relating to the operation of the external load device based on the operation sense signal and transmits the information relating to the operation of the external load device to the external information device 50 including an operation panel, such as a smartphone, via the antenna 24 for wireless communication. As the information relating to the operation of the external load device, if the external load device is a hand soap dispenser, for example, the total number of operating times since a cell is swapped the last time, a total operating time period of time periods for which the motor repeated its operation, etc. is calculated. Alternatively, if the external load device is a sensor light device, for example, the number of lighting times since a cell is swapped the last time, a total lighting time period, etc. is calculated. These kinds of information relating to the operation of the external load device allow the estimation of a timing to swap the cell. Here, the external load device is described as a hand soap dispenser, and the information of the operation thereof is described as the total number of operating times and total operating time period of the motor since a cell is swapped the last time. The RFIC 35 increments a count value (the total number of operating times) by one in synchronization with transition of the operation sense signal from the low-level to the high-level. The count value is reset to zero when the power source is separated such as when the cell is detached from the battery case. The RFIC 35 measures a duration for which the operation sense signal is kept at the high-level as an operating time period and integrates the operating time period to calculate the total operating time period.

The RFIC 35 transmits information relating to the operation of the external load device as appropriate. For example, as shown in Fig. 11A, the RFIC 35 transmits a signal representing the operation state of the external load device in response to an update of the count value (the total number of operating times) when the external load device operates, and the operation sense signal transits from the low-level to the high-level. However, a timing for the transmission is not limited to this. As illustrated in Fig. 11B, the RFIC 35 may be configured to transmit a signal representing the operation state of the external load device at least one of, typically at the earlier of a time point when the total number of operating times reaches a predetermined number of times (called a threshold number of times) and a time point when the total operating time period reaches a predetermined duration (called a threshold duration). Of course, the RFIC 35 may be configured to transmit the signal representing the operation state of the external load device at one time point selected in advance, i.e., the time point when the total number of operating times reaches the threshold number of times, or may be configured to transmit the signal representing the operation state of the external load device at the time point when the total operating time period reaches the threshold duration.

Alternatively, as shown in Fig. 11C, the RFIC 35 may be configured to transmit the signal representing the operation state of the external load device on predetermined intervals (transmission intervals). All of the three kinds of transmission timing control may be included so that a user can select and apply one of them, or any one kind of the transmission timing control may be included. Of course, the threshold number of times and the transmission interval are set at any values.

In this way, the cell type power supply device according to the third embodiment can detect current flowing in its circuit, thereby detecting the operation of the external load device in which the cell type power supply device is mounted, and transmit the information relating to the operation of the external load device to the external information device. Therefore, maintenance of an electronic device that needs maintenance work after a predetermined number of operations can be made easy. For example, by mounting the cell type power supply device according to the third embodiment in a soap dispenser, a maintenance operator can grasp the number of uses of the soap dispenser, thereby performing refilling work of soap efficiently.

### (Fourth Embodiment)

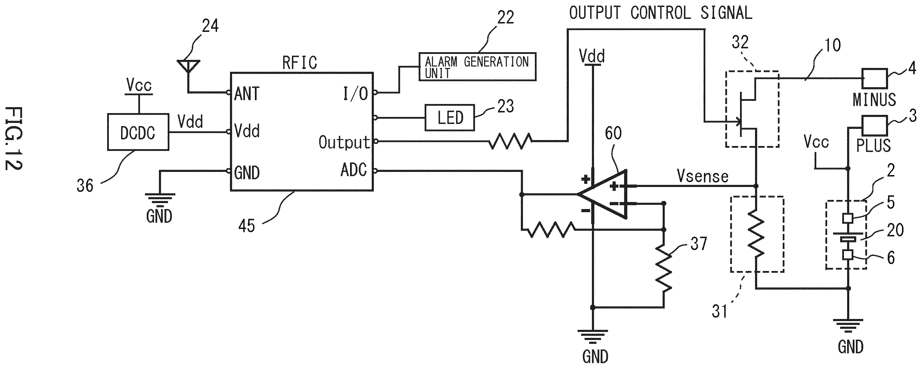

As illustrated in Fig. 12, the comparator 30 of the cell type power supply device 1 according to the above third embodiment is swapped for an operational amplifier 60. The operational amplifier 60 amplifies the difference between the detected voltage Vsense and the GND. The output voltage of the operational amplifier 60 reflects current flowing through the output transistor 32. An analog-digital converter (ADC) built in the RFIC 35 converts the output voltage of the operational amplifier 60 into a digital signal (current data). The current data represents a value of the current flowing through the output transistor 32.

With the application of the current data, the RFIC 35 can perform various kinds of information processing. For example, the RFIC 35 compares the current data with a threshold value to determine the operation (operating/standby) of the external load device 11, generates information relating to the operation of the external load device 11, and wirelessly transmits the information to the external information device 50 via the antenna 24, as in the third embodiment. In addition, the RFIC 35 can change the threshold value to any value in accordance with, for example, the external load device 11. For example, the threshold value may be set during manufacture, and a user may be allowed to set the threshold value at the start of use of the cell type power supply device in accordance with the operating voltage of the external load device 11 in which the cell type power supply device is mounted. When the user sets the threshold value, for example, when the external load device 11 is on standby, the user performs operation on an external information device 50 side to tell the cell type power supply device that the external load device 11 is on standby, and when the external load device 11 is operating, the user performs operation on the external information device 50 side to tell the cell type power supply device that the external load device 11 is operating, whereby the threshold value can be set by monitoring current flowing on a cell type power supply device side.

In addition, when the external load device 11 is not used, the user performs operation on the external information device 50 side or sets a timer of the external information device 50 to transmit an instruction to "turn off the power source of the external information device 11", to the cell type power supply device from the external information device 50, whereby the gate signal from the RFIC 35 to the output transistor 32 can be stopped to turn off the power source of the external load device 11, thereby suppressing power consumption. For example, when the external load device 11 is a sensor light, the power thereof can be turned off during daytime hours.

Alternatively, when the external load is a DC motor, current thereof is in proportion to a torque thereof. Since the loading state of the motor can be estimated from current data, the RFIC 35 can provide feedback about a current value (the current data) to adjust the duty cycle of the gate signal to the output transistor 32 based on the current value, thereby performing torque control. For example, when a current value is relatively high, it is determined that the motor is under a heavy load, and the duty cycle of the gate signal to the output transistor 32 is increased, and when the current value is relatively low, it is determined that the monitor is under a light load, and the duty cycle of the gate signal to the output transistor 32 is decreased.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

### REFERENCE SIGNS LIST

1 ... cell type power supply device including wireless function, 2 ... cell holder, 3 ... outer positive terminal, 4 ... outer negative terminal, 5 ... inner positive terminal, 6 ... inner negative terminal, 7 ... substrate, 11 ... external load device, 12 ... cell box, 13 ... another battery, 17 ... main body, 18 ... housing, 19 ... cut portion, 24 ... antenna, 30 ... comparator, 31 ... detection resistance, 32 ... output transistor, 34 ... transistor for output cutoff, 35 ... RFIC, 36 ... DC-DC converter, 37, 38, 39 ... resistance, 43 ... transistor

## Claims

1. A cell type power supply device having a wireless communication function and attachable in a cell box of an external load device, the cell type power supply device comprising:
a housing having a shape and dimensions based on a cell standard;
a cell holder that holds an external cell in the housing, and includes an inner positive terminal and an inner negative terminal that are brought into contact with front and rear terminals of the held external cell;
an outer positive terminal provided on a front end surface of the housing and connected to the inner positive terminal;
an outer negative terminal provided on a rear end surface of the housing and connected to the inner negative terminal;
an output transistor interposed at least one of between the inner negative terminal and the outer negative terminal and between the inner positive terminal and the outer positive terminal;
an antenna that communicates with an external information device;
a control circuit that generates a control signal of the output transistor in accordance with a signal received via the antenna;
a detection resistance provided in series to the output transistor to convert current flowing through the output transistor into voltage; and
a current detection unit that detects the voltage converted by the detection resistance.

2. The cell type power supply device having a wireless communication function according to claim 1, wherein
the current detection unit includes a comparator that compares the voltage converted by the detection resistance with a reference voltage and, based on a comparison result, outputs an output voltage at different levels between when overcurrent flows through the output transistor and when overcurrent does not flow through the output transistor, and
a voltage of the control signal of the output transistor is changed with a change of the output voltage of the comparator, whereby the output transistor is cut off.

3. The cell type power supply device having a wireless communication function according to claim 2, wherein a gate of the output transistor is connected to a ground or a power source via a transistor for output cutoff, the transistor for output cutoff receives an output voltage of the comparator with a gate of the transistor for output cutoff, when the output voltage of the comparator is at a low-level or a high-level, the transistor for output cutoff is OFF, when the output voltage of the comparator is at a high-level or a low-level, the transistor for output cutoff is ON to change a gate voltage of the output transistor to the ground or the power supply voltage, whereby the output transistor is cut off.

4. The cell type power supply device having a wireless communication function according to claim 2, wherein the reference voltage is equal to a voltage that is to be converted by the detection resistance when the overcurrent occurs.

5. The cell type power supply device having a wireless communication function according to any one of claims 2 to 4, wherein a low-pass filter is provided in an input stage of the comparator.

6. The cell type power supply device having a wireless communication function according to any one of claims 2 to 4, wherein a monostable vibrator is provided in an output stage of the comparator to keep the output voltage for a predetermined time period.

7. The cell type power supply device having a wireless communication function according to claim 2, wherein the control circuit wirelessly transmits a signal via the antenna to an external wireless device in response to a change of the output voltage of the comparator, the signal indicating that the overcurrent flows through the output transistor.

8. The cell type power supply device having a wireless communication function according to claim 2, further comprising an LED, wherein the control circuit turns on or blinks the LED in response to a change of the output voltage of the comparator.

9. The cell type power supply device having a wireless communication function according to claim 2, further comprising an alarm generation unit, wherein the control circuit drives the alarm generation unit to generate an alarm in response to a change of the output voltage of the comparator.

10. The cell type power supply device having a wireless communication function according to claim 1, wherein
the current detection unit includes an operational amplifier that amplifies a difference of the voltage converted by the detection resistance with respect to the reference voltage, and
the voltage of the control signal of the output transistor is changed with a change of the output voltage of the operational amplifier, whereby a peak current flowing through the output transistor is suppressed.

11. The cell type power supply device having a wireless communication function according to claim 10, wherein
the gate of the output transistor is connected to the ground or the electric power source via the transistor for output adjustment, and
the output voltage of the operational amplifier is a value in proximity to a threshold value of the transistor for output adjustment when overcurrent occurs in the output transistor, and the output voltage of the operational amplifier is at a low-level or a high-level when overcurrent does not occur in the output transistor.

12. The cell type power supply device having a wireless communication function according to claim 10, wherein the reference voltage is equal to a voltage that is to be converted by the detection resistance when overcurrent occurs in the output transistor.

13. A cell type power supply device having a wireless communication function and attachable in a cell box of an external load device, the cell type power supply device comprising:
a housing having a shape and dimensions based on a cell standard;
a cell holder that holds an external cell in the housing, and includes an inner positive terminal and an inner negative terminal that are brought into contact with front and rear terminals of the held external cell;
an outer positive terminal provided on a front end surface of the housing and connected to the inner positive terminal;
an outer negative terminal provided on a rear end surface of the housing and connected to the inner negative terminal;
an output transistor interposed at least one of between the inner negative terminal and the outer negative terminal and between the inner positive terminal and the outer positive terminal;
an antenna that communicates with an external information device;
a control circuit that generates a control signal of the output transistor in accordance with a signal received via the antenna;
a detection resistance provided in series to the output transistor to convert current flowing through the output transistor into voltage; and
an information processing unit that generates a signal representing information relating to operation of the external load device based on a change of the voltage converted by the detection resistance and wirelessly transmits the signal to the external information device via the antenna.

14. The cell type power supply device having a wireless communication function according to claim 13, wherein a comparator is further provided to detect the change of the voltage converted by the detection resistance, the comparator comparing the voltage converted by the detection resistance with a reference voltage.

15. The cell type power supply device having a wireless communication function according to claim 13, wherein the information processing unit compares the voltage converted by the detection resistance with a threshold voltage and changes the threshold voltage in accordance with the external load device, to detect the change of the voltage converted by the detection resistance.

16. The cell type power supply device having a wireless communication function according to claim 13, wherein the information relating to the operation of the external load device is at least one of an operation number of times and an operating time period of the external load device.

17. The cell type power supply device having a wireless communication function according to claim 13, wherein the information processing unit transmits the signal representing the information relating to the operation of the external load device to the external information device in response to at least one of the operation number of times and the operating time period of the external load device reaching a predetermined threshold value.

18. The cell type power supply device having a wireless communication function according to claim 13, wherein the information processing unit periodically transmits the signal representing the information relating to the operation of the external load device to the external information device.
